(19) Europäisches Patentamt / European Patent Office / Office européen des brevets

(11) **EP 2 635 433 B1**

(12) **EUROPEAN PATENT SPECIFICATION**

(45) Date of publication and mention
of the grant of the patent:
**11.01.2017   Bulletin 2017/02**

(21) Application number: **10782216.5**

(22) Date of filing: **03.11.2010**

(51) Int Cl.:
**B32B 17/10** $^{(2006.01)}$      **G02B 6/00** $^{(2006.01)}$

(86) International application number:
**PCT/EP2010/066734**

(87) International publication number:
**WO 2012/059126 (10.05.2012 Gazette 2012/19)**

(54) **LAMINATED INORGANIC AND ORGANIC GLASS DIFFUSED LIGHTING PANEL**

DIFFUSER LEUCHTSCHIRM AUS LAMINIERTEM ANORGNISCHEN UND ORGANISCHEN GLAS

PANNEAU ÉCLAIRANT DIFFUS DE PLAQUES DE VERRE INORGANIQUE ET ORGANIQUE STRATIFIÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.09.2013   Bulletin 2013/37**

(73) Proprietor: **AGC Glass Europe
1348 Louvain-la-Neuve (BE)**

(72) Inventor: **AYOUB, Patrick
B-6040 Jumet (BE)**

(74) Representative: **Chabou, Samia
AGC Glass Europe
Technovation Centre
IP Department
Rue Louis Blériot, 12
6041 Gosselies (BE)**

(56) References cited:
WO-A1-2005/031411      WO-A1-2007/077099
US-A- 4 243 719      US-A- 5 593 786
US-A1- 2007 098 969      US-A1- 2008 190 071

• Jian H. Yu, Alex J. Hsieh, and Gregory C.
Rutledge: "Novel Transparent PMMA
Composites for Optical Tagging", U.S. Army
Research Laboratory , September 2010 (2010-09),
pages 1-10, XP002649570, Internet Retrieved
from the Internet:
URL:http://www.dtic.mil/dtic/tr/fulltext/u
2/a531405.pdf [retrieved on 2011-07-12]
• "Optical constants of Poly(methyl methacrylate)
(PMMA, Acrylic glass)", , 1 July 2006
(2006-07-01), XP002649571, Retrieved from the
Internet:
URL:http://refractiveindex.info/?group=PLA
STICS&material=PMMA [retrieved on 2011-07-06]

**Description**

**Field of the invention**

This invention relates to laminated glass lighting panels, and to methods of manufacturing the same.

**Description of the Related Art:**

Laminated glass can be used as a type of safety glass that holds together when shattered. In the event of breaking, it is held in place by the plastics interlayer, typically of Polyvinylbutyral (PVB), between its two or more layers of glass substrate. The plastics interlayer keeps the layers of glass substrate bonded even when broken, and its high strength prevents the glass substrates from breaking-up into large sharp pieces.

Methods for manufacturing laminated glass are well-known in the window industry. A so-called sandwich of the first glass substrate, the plastics interlayer and the second glass substrate is laminated in an automated laminating line by using procedures such as calendering and autoclaving. Calendering of the glass/plastic laminate means the pre-gluing of the sandwich under the action of a pressure imposed by rolls applied on either side of the glass substrates, optionally with action of heat. The final gluing of the glass substrates by a vacuum/heating cycle, which combines pressure and temperatures, takes place during the step of autoclaving, which completely removes air between the plastics interlayer and the glass substrates. The result is a clear glass laminate well known from car windscreens.

Laminated glass panels with integrated light sources such as light emitting diodes (LEDs), are known, e. g. for displaying information or for lighting purposes. For these application areas, the manufacturing of a laminated glass panel with electronic components typically comprises the steps of depositing a conductive layer on the first glass substrate, realization of electronic circuits in the conductive layer and depositing of electronic components on the conductive layer, connected to the electronic circuits. The plastics interlayer is then deposited on the conductive layer. The sandwich is obtained by the application of the second glass substrate on the plastics interlayer, which is then laminated as outlined before. In each of these applications it is necessary to furnish an electric supply to the conducting layer for supplying electrical power to the LEDs. EP 1 840 449 describes such a panel of laminated glass embedding LEDs. The LEDs are arranged in a regular grid at 5cm intervals such that the array of diodes covers substantially the entire area of glazing panel. Each LED has a surface area of about 4mm$^2$. First and second bus bars extend substantially along the entire length of one edge of the panel, laminated between the two glass sheets.

It is also known to use light sources such as light emitting diodes (LEDs) that are arranged to emit light into laminated glass panels along a plane of the panel such as described in WO2010097110A1. In that document, the LEDs are arranged to emit light into the plastic interlayer that is at least partially light diffusive to cause the light to be deflected that cause the glass panel to be illuminated.

Lighting panels comprising at least one organic glass layer with LEDs that are arranged to emit light into the organic glass layer such as Plexiglas EndLighten sold by EVONIK Industries are also known. In such panel, the organic glass layer is made of Poly(methyl methacrylate) embedding colorless diffuser particles which cause the light to diffuse forwards. Nevertheless the major problem with the use of organic glass layers is that their surfaces are highly sensitive to defaults such as scratches and/or stripes. Moreover, due to their manufacturing process, some defaults such has protrusions can be present on the surfaces of the inorganic glass layer. Then, due to the difference of refractive index between the organic glass layer and air (that fills the defaults), every default (scratch and/or stripe and/or protrusion) on the surface of the organic glass layer creates local refraction of the light beam propagating in the panel that deteriorates the uniformity of light generated on the surface of such panel and then also the overall aesthetics of the illuminated panel.

**Summary of the Invention:**

An object of the invention is to provide laminated glass lighting panels, and methods of manufacturing the same.

According to a first aspect, the invention provides:

> a laminated glass lighting panel, comprising
> a first glass substrate and an organic glass layer;
> at least one light source being arranged to emit light into the panel along a plane of the panel,
> wherein at least part of the organic glass layer is arranged to deflect the light out of the plane of the panel and through at least the first glass substrates to provide a diffused light output,
> and wherein the first glass substrate and the organic glass layer are laminated together via a first plastic interlayer (or plastic intermediate layer), the first plastic interlayer having a refractive index that is chosen to be equal to the refractive index of the organic glass layer.

By having the light deflected by the plastic interlayer, it can be spread or diffused more widely to reduce problems caused by more direct illumination from point sources.

During the lamination process, the at least partially melted plastic interlayer fills the defaults such as scratches and/or stripes and/or protrusions preexisting on the surface of the organic glass layer. Then, by having the refractive index chosen to be equal to the refractive index of the organic glass layer such filling of the defaults allows to remove any local refraction of the light beam propagating through the defaults in the panel. Then, the uniformity of the light generated at the surface of panel and the overall aesthetics of the illuminated panel are improved or are kept despite the presence of the defaults on the surface of the organic glass layer.

Embodiments of the invention can have any other features added, some such additional features are set out in dependent claims and described in more detail below.

According to another aspect of the invention, the at least one light source is arranged to emit light into the organic glass layer predominantly along a plane of the panel.

According to another aspect of the invention, the organic glass layer is at least partially light diffusive to cause the light to be deflected.

According to another aspect of the invention, the organic glass layer is a Poly(methyl methacrylate) layer.

According to another aspect of the invention, the organic glass layer is a Poly(methyl methacrylate) layer embedding colorless diffuser particles which cause the light to diffuse forwards.

According to another aspect of the invention, the first plastic interlayer is a transparent Polyurethane layer.

According to another aspect of the invention, the at least one light source comprising a light source mounted on a frame at an edge of one or both of the glass substrates so as to face the first plastic interlayer.

According to another aspect of the invention, the at least one light source comprising a side emitting source mounted on an interior surface of one of the glass substrates.

Preferentially, the panel also comprises a second glass substrate, the first glass substrate, the organic glass layer and the second glass substrate being laminated together via respectively a first and a second plastic interlayers (or plastic intermediate layers), both plastic interlayers having a refractive index that is chosen to be equal to the refractive index of the organic glass layer.

According to another aspect of the invention, at least one surface of the organic glass layer has at least one default.

In the following, the expression default encompasses all kind of surface default such as scratches, stripes, protrusion, roughness, striates, projections, slits, puncture, groove, depression, ... The defaults can be microscopic. The defaults can be macroscopic.

Another aspect provides a method of manufacturing a laminated glass lighting panel comprising a first glass substrate and an organic glass layer and comprising the following steps :

laminating the first glass substrate and the organic glass layer, with a first plastic interlayer in between, the plastic interlayer having a refractive index that is chosen to be equal to the refractive index of the organic glass layer,
and forming at least one light source to emit light into the panel along a plane of the panel, wherein at least part of the organic glass layer is arranged to deflect the light out of the plane of the panel and through at least the first glass substrates to provide a diffused light output.

According to another aspect of the invention, at least one surface of the organic glass layer has at least one default.

According to another aspect of the invention, the laminating step comprises a step of heating the first plastic interlayer so that the melted plastic interlayer fills said default(s).

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

**Brief Description of the Drawings:**

How the present invention may be put into effect will now be described by way of example with reference to the appended drawings, in which:

Figures 1 shows a cross section view of a particular embodiment according to which the light sources are LEDs that are arranged at the periphery of the glass panel in order to emit light in a direction along the plane of the glass substrates;
Figure 2 shows a top view of figure 1 embodiment;
Figure 3 shows a cross section view of the sandwich first glass substrate, first plastic interlayer, organic glass layer, second plastic interlayer and second glass substrate before the lamination (calendaring and autoclaving) process;
Figure 4 shows a cross section of the sandwich during the autoclaving process;
Figure 5 shows a cross section of the sandwich after the lamination process.

**Description of the Preferred Embodiments:**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

Introduction to some embodiments

Some of the features described below arise from an appreciation that the surfaces of an organic glass layer are highly sensitive to defaults such as scratches and/or stripes and/or protrusions and then light generated on the surface of such a panel is not perfectly uniform and the overall aesthetics of the panel is decreased.

Thus an objective of at least some of the embodiments is to provide a panel of laminated glass including at least one light source which provides surface lighting with an improved uniformity. Another objective of some embodiments is to provide such a surface lighting panel in which the aesthetics of the panel is improved. Another objective of at least some embodiments is to provide such a surface lighting panel which provides a uniformly diffused surface lighting despite the presence of defaults on the surface of an organic glass layer being part of the panel.

Some embodiments involve a glass panel, comprising a first glass substrate and an organic glass layer, laminated together via a plastic interlayer, the plastic interlayer having a refractive index that is chosen to be equal to the refractive index of the organic glass layer. The lamination can be of any type, not only the examples described. The glass substrates can encompass glass equivalents such as hard plastic or Perspex acrylic or polycarbonate materials. The panel can have at least one light source arranged to emit light into the panel along a plane of the panel, and preferably to emit light into the organic glass layer predominantly along a plane of the panel (but light can also be emitted into one of the first glass substrate and the plastic interlayer along a plane of the panel). The panel can further comprise a second glass substrate, in that case, the first glass substrate, the organic glass layer and the second glass substrate can be laminated together via respectively a first and a second plastic interlayers, both plastic interlayers having a refractive index that is chosen to be equal to the refractive index of the organic glass layer.

The organic glass layer can be arranged to be at least partially light diffusive such that light emitted by the at least one light source is deflected out of the plane of the panel and through the surface of at least one of the glass panels. This can be made partially diffusive by choice of properties of the material, by adding particles (e.g. colorless or colored diffuser particles), by adding any kind of reflective or partially reflective structures, or by surface treatments to hinder total internal reflection and so on. The panel need not be flat, it can be formed to have a curved main surface for instance, the panel can be a vehicle windshield.

In the following we consider that the first refractive index n1 of a first material and the second refractive index n2 of a second material are equal when their relative difference is inferior to 5% :

$$\left| \frac{(n1-n2)}{\frac{(n1+n2)}{2}} \right| \times 100 \le 5 \,.$$

The refractive index of a material can be measured with an optical refractometer such as an Abbe refractometer.

Additional features:

Some additional features of some of the embodiments are as follows. Each of the plastic interlayers can comprise transparent polyurethane layers (obviously, they can also comprise Polyvinylbutyral (PVB) layers). Each plastic interlayer can comprise several plastic layers made from identical or different material.

In some cases at least one light source such as an LED, OLED etc. can be positioned at the periphery of the glass panel in order to emit light at the edge of the panel in a direction included in the plane of the glass substrates.

Clearly in other cases at least one light source of any kind (LED, OLED, laser diodes, fluorescent tube, fluorescent lamp, for example...) can be positioned anywhere or everywhere in the panel (for example a regular matrix of side emitting light sources covering all the surface of the panel can be embedded in the panel, or a line of side emitting light sources can be embedded in the panel, ...). The light source(s) can be embedded in the panel or positioned at the edge of the panel.

In general, the plastics interlayer can be provided as a plastic foil or a plastic sheet. According to a preferred embodiment of the invention, the plastics interlayer is provided as Polyvinylbutyral (hereafter referenced PVB). Typically, the plastics interlayer is not transparent when applied, but becomes transparent after laminating, i.e. after calendering and autoclaving. Further, a thermoplastic material such as Polyurethane can be used as a plastics interlayer.

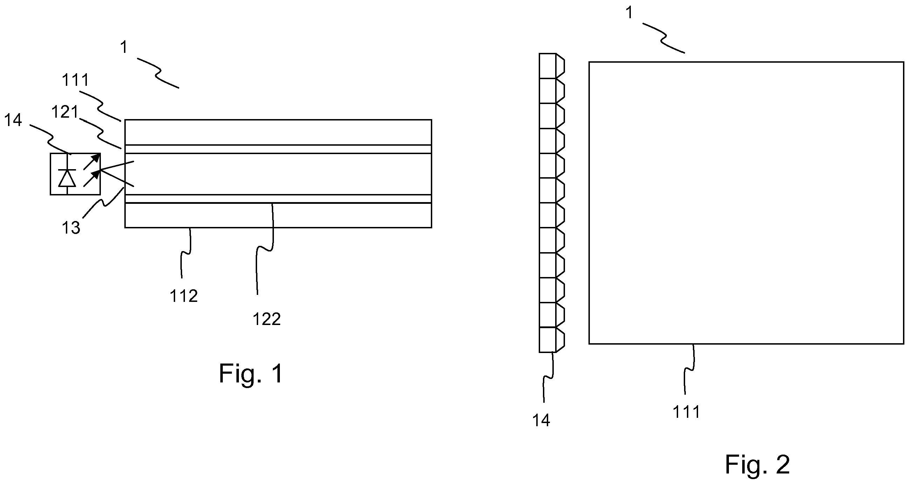

Figures 1 and 2 - a first embodiment

Figure 1 shows a cross section view and figure 2 shows a top view of a particular embodiment according to which the light sources are LEDs 14 that are arranged at the periphery of the glass panel 1 in order to emit light in a direction along the plane of the glass substrates 111, 112.

An example is provided regarding an assembly that is represented in Figure 1 and Figure 2. As can be seen from Fig. 1, according to a preferred embodiment of the invention, the panel of laminated glass 1 comprises a first glass plate or substrate 111, a first plastic interlayer 121, an organic glass layer 13, a second plastic interlayer 122 and a second glass plate or substrate 112, wherein the first plastic interlayer 121 is provided between the first glass substrate 111 and the organic glass layer 13 and the second plastic interlayer is provided between the organic glass layer 13 and the second glass substrate 122.

Clearly, according to another embodiment of the invention, the glass panel does not comprise any second plastic interlayer 122 and second glass substrate 112.

Preferentially, the LEDs 14 are arranged to emit light into the organic glass layer 13 predominantly along a plane of the panel.

The organic glass layer 13 is arranged to deflect the light out of the plane of the panel and through at least the first glass substrates to provide a diffused light output. Preferentially, it is at least partially light diffusive to cause the light to be deflected.

For instance, the organic glass layer is a Poly(methyl methacrylate) layer and more particularly a Poly(methyl methacrylate) (hereafter referenced PMMA) layer embedding colorless diffuser particles which cause the light to diffuse forwards. For instance, the organic glass layer is a layer of Plexiglas Endlighten L, Grade number 0N001, 6mm thickness that is sold by the company EVONIK Industries. The refractive index of this PMMA is 1.491 measured using ISO 489. According to another embodiment, the organic glass layer embeds particles only on a part of its volume, for instance only in a central part of that layer. Different particle concentrations can be used and can be adapted to the dimensions of the glass panel 1.

Both of the first and second plastic interlayers 121, 122 may be provided as transparent polyurethane layers that are preferably UV insensitive and that has a refractive index comprised between 1.48 to 1.5. Both of the first and second plastic interlayers 121, 122 may also be provided as PVB layers, e.g. the PVB sold by Solutia with the reference RF41.

Then, the refractive index of the first and the second plastic interlayers 121, 122 is equal to the refractive index of the organic glass layer 13 (5% of relative difference tolerated).

The glass of the first and second glass substrates can be coated, tinted, tempered or bended or a combination of these. In this example 30cm*30cm sheets with a thickness of 2.1mm can be considered, though other dimensions can be used according to the application. The LEDs 5 can be for example LEDs sold by OSRAM with the reference LUW CN5M.

Then, thanks to the presence of the diffuser particles in the organic glass layer 13, the organic glass layer 13 cause the light emitted by the light sources (LEDs 14) to diffuse forward and then deflects the light emitted by the LEDs 14 out of the plane of the panel 1 and through the first and second glass substrates to provide a diffused light output.

Basic methods for assembling/manufacturing laminated glass, without the novel features of the present invention, for use in this and other embodiments are well-known in the window industry and so need not be described in detail. A so-called sandwich of the first glass substrate, the first plastic interlayer, the organic glass layer, the second plastic interlayer and the second glass substrate is laminated in an automated laminating line by using the procedure of calendaring and autoclaving. Calendaring involves the pre-gluing of the sandwich under the action of a pressure imposed by two rolls applied on either side of the first and second glass substrates, optionally with action of heat. The final gluing of the glass substrates by a vacuum/heating cycle, which combines pressure and temperatures, takes place during the step of autoclaving, which completely removes air between the first and second plastic interlayers and the glass substrates and organic glass layer. The result is a clear glass laminate.

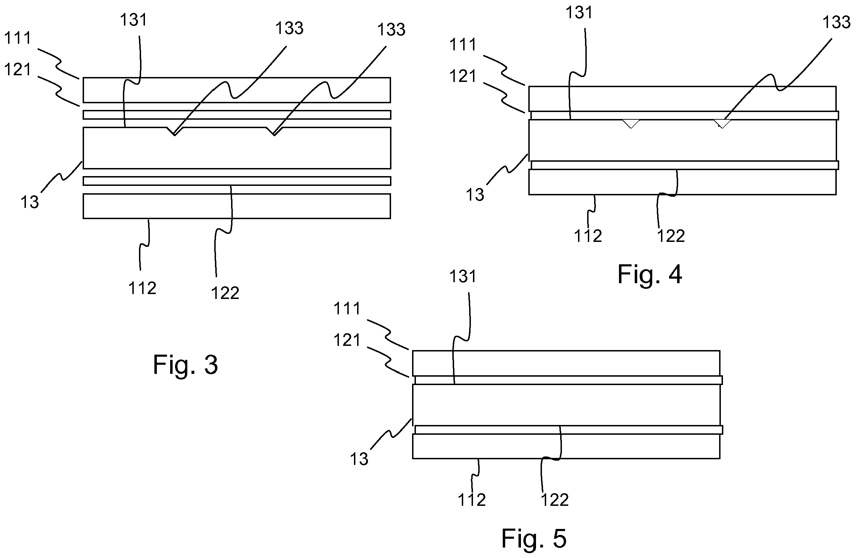

Figure 3, 4 and 5 are cross section views of the sandwich first glass substrate 111, first plastic interlayer 121, organic glass layer 13, second plastic interlayer 122 and second glass substrate 112 respectively before the lamination (calendaring and autoclaving) process, during the autoclaving process and after the lamination process.

We consider that the organic glass layer 13 has defaults e.g. scratches 133 on at least one of its surfaces, for instance on the first surface 131 (surface of the first face 131).

As illustrated by figure 4, during the autoclaving, under the action of heat, the first plastic interlayer 121 melts and then, the melted plastic interlayer fills the defaults 133 of the first surface 133 of the organic glass layer 13. The air initially present in the defaults 133 is evacuated during the autoclaving process.

The result illustrated by figure 5 is that, due to the fact that the first plastic interlayer 121 and the organic glass layer 13 has the same refractive index, from an optical view point, the defaults 133 have disappeared and does not exist anymore. The defaults 133 are invisible from the eyes of the users and the local refraction of the light beam propagating in the panel 1 created by the defaults 133 on the first surface 131 of the organic glass layer 13 does not occur anymore.

Then, the lighting panel 1 has a surface lighting with an improved uniformity and the aesthetics of the panel is improved. Such a surface lighting panel 1 provides a uniformly diffused surface lighting despite the presence of defaults 133 on the surface of the organic glass layer 13.

The manufacturing of the laminated glass panel can incorporate electric or electronic components. Examples of such components are lamps, transistors, diodes, switches, microphones, actuators, amplifiers, interfaces, microprocessors, antennae, and passive devices such as resistors, inductors, capacitors. In this case typically there are steps of depositing a conductive layer on the first layer of glass substrate, realization of electric or electronic circuits in the conductive layer and depositing of electric or electronic components on the conductive layer, e.g. connected in electric or electronic circuits. The plastics interlayer is then deposited on the conductive layer. The sandwich is obtained by the application of the second layer of glass on the plastics interlayer, which is then laminated as outlined before.

Figure 2 shows a top view, showing a strip of light sources 14 down one edge of the square laminated glass panel 1.

A first embodiment of a method of manufacturing of the laminated glass lighting panel 1 that has the light sources such as LEDs 14 as an exterior element added to the glass panel 1 after lamination process. A second embodiment described below has light sources such as LEDs 14 embedded with the glass panel 1 before lamination process.

Steps according to a first embodiment with edge lighting as an exterior element can be as follows:

1 - Cut two pieces of clear float glass sheets in order to obtain the first and second glass substrates 111, 112 that have the desired dimensions, for example 15cm*15cm and total thickness of 2,1 mm.
2 - Cut two pieces of standard plastic intermediate layer (or interlayer) such as transparent polyurethane layer in order to obtain the first and second plastic interlayers 121, 122 that have the desired dimensions, for example 15cm*15cm and total thickness of 1.56mm.

3 - Cut a piece of Plexiglas Endlighten L, Grade number 0N001, 6mm thickness that is sold by the company EVONIK Industries, in order to obtain the organic glass layer 13 that have the desired dimensions, for example 15cm* 15cm and total thickness of 6 mm. For instance, the PMMA layer has scratches on one of its surfaces.

4 - Superpose the first glass substrate, the first plastic interlayer, the PMMA layer, the second plastic interlayer and the second glass substrate.

5 - Use a normal laminating cycle comprising a calendaring process and an autoclaving process. During the autoclaving, under the action of heat, the first and second plastic interlayers melts and then, the melted plastic interlayers fill the defaults on the surface(s) of the organic glass layer. The air initially present in the defaults is evacuated during the autoclaving process.

6 - The LEDs 14 (light sources) can be fixed to the laminated glass structure using a frame such as for example a metallic profile. The fixing can be made by a press fit over the edges of the laminated glass, or with the use of a glue for example. The light sources can be top emitting LEDs arranged to emit light into the panel along a plane of the panel, for example located to be in the plane of the organic glass layer 13 and arranged to emit light into the organic glass layer 13. Side emitting LEDs can also be used to emit light into the organic glass layer 13.

A second embodiment of a method of manufacturing of the laminated glass lighting panel 1 that has the light sources such as side emitting light sources, e.g. side emitting LEDs 14 mounted on an interior surface of one of the glass substrates.

For instance, an array of LEDs 14 is coupled in parallel along one edge of the glass panel 1. Electrical supply is provided from electrical wires, e.g. soldered electrical wires that are electrically connected, e.g. soldered to a bus bar at each end of the array.

A method of manufacturing according to that second embodiment using such side emitting light sources, e.g. LEDs will now be described.

1 - Cut two pieces of clear float glass sheets in order to obtain the first and second glass substrates 111, 112 that have the desired dimensions, for example 15cm*15cm and total thickness of 2,1 mm.

2. Form a conductive coating on the first glass substrate 111. This coated glass should allow electric conduction with a resistance of preferably below 20ohm/square.

Known conductive coatings are for instance metallic oxide layers, the width of which generally lies within 0.02 and 0.5 $\mu$m, preferentially between 0.2 and 0.4 $\mu$m and the surface resistance of which generally lies between 10 and 80 $\Omega$/square, preferentially between 12 and 20 $\Omega$/square.

Such conductive coatings comprise for instance Indium or Aluminium doped zinc oxide, fluorine or Antimony doped tin oxide, or Tin doped Indium oxide (ITO). Other conductive coatings are silver (or other metal) based coatings. These coatings can comprise one, two or tree silver layers, separated by dielectric layers. For conductive coatings comprising a total width of conductive material lying within 10 to 30 nm, the surface resistance can be very small : about 2 to 3 $\Omega$/square. Preferentially, the conductive coating is transparent.

The conductive layer can be provided as coplanar and/or thin tin oxide films, e.g. indium tin oxide (ITO) films, and may be applied by any suitable method such as chemical vapour deposition (CVD) coatings or magnetron (sputtered) coatings, thus providing an electrically conductive layer. The conductive layer can also be provided as metallic layer(s) or layer(s) made of any suitable electrically conductive material. The conductive layer can also be applied by other methods such as serigraphy, screen printing, and other suitable method. For instance, the conductive layer may comprises an underlying coating comprising a conductive oxide such as silicon oxide carbide and an overlying coating comprising a conductive metal oxide such as SnO2:F. The conductive layer may also comprises a substantially color neutral coating stack, e.g. a chemical vapor deposition (CVD) coating stack comprising a silicon oxide carbide undercoat and an overlying SnO2:F coating, wherein the coating has preferably a resistance of about 15 ohms per square.

3. Pattern the conductive coating to form a required circuit having connections including large areas for use as bus bars which can be receive a joint such as a solder joint, for example using a laser.

4. Fix side emitting light devices such as side emitting LEDs using a suitable means, e.g. conductive glue on the circuit that has been patterned.

5. Add electrical contacts by wires connected to the bus bars, e.g. soldering wires onto bus bars.

Then, previously mentioned steps 2 to 5 (in relation with first embodiment of a method of manufacturing of the laminated glass lighting panel 1) are implemented.

Other embodiments

In some cases one or both the first and second glass substrates can be flat soda lime glass, notably float glass. One or both of the first and second glass substrates may be clear glass, extra clear glass or body tinted glass. Particularly when intended for use in window applications, the glazing panel may be substantially transparent. In this case, it may have a light transmission (CIE Illuminant C) of greater than or equal to 40%, 50%, 60% or 70% and/or a level of haze of less than or equally to 5%, 3% or 2% for example. Particularly when intended for decoration and/or lighting purposes, it may be unnecessary and/or undesired for the panel to be substantially transparent. In this case, it may have a light transmission (CIE Illuminant C) of less than or equal to 20%, 10%, or 5% and/or a level of haze of greater than or equally to 30%, 40% or 50%.

A substantially transparent electrically conductive coating layer may be applied on the glass near the edges for providing power to the LEDs. First glass substrate, organic glass layer and second glass substrates may be laminated together to form a laminated assembly via respectively first and second plastics interlayers one or both of which can comprise one or more sheets of PVB or a resin, for example EVA. The plastics interlayers may be substantially transparent; it may be neutral or clear in colour or it may be body tinted.

According to the second embodiment of a method of manufacturing of the laminated glass lighting panel 1, in some cases, the majority or substantially the entire surface area of the first glass substrate can be provided with LEDs, that is to say that the LEDs form an array of spaced LEDs with the array covering greater than 50%, 60%, 70%, 80% or 90% of the surface area of the panel. In other cases, only a peripheral portion (for instance one, two, tree or four peripheral edge(s) of the surface area of the first glass substrate can be provided with LEDs.

Examples of additives to make the organic glass layer diffusive can encompass inorganic particles of glass, silica, mica, synthetic mica, calcium carbonate, barium sulfate, talc, montmorillonite, kaolin clay, bentonite, hectorite, etc., metal oxide particles of titanium oxide, zinc oxide, tin oxide, alumina, etc., or organic polymer particles of acrylic beads, styrene beads, benzoguanamine, silicone, etc. A haze value when the diffusing material is added is preferably not lower than 10% but not greater than 99%. If it is lower than 10%, a sufficient light scattering effect may not be obtained, and if it is greater than 99%, the light transmission characteristics degrade, greatly reducing the amount of emergent light.

More diffusion can be obtained by surface roughening of a light-emitting face accomplished by cutting using a saw or an automatic cutter (for example, an NC router) or by blasting, surface grinding using a grinder, emboss forming, etc. In the case of blasting, particles are applied using a high-speed blasting machine over the surface of the organic glass layer, the interlayers or the glass substrates to form random projections and depressions, and the thus formed surface can be used as the light-emitting face. In the case of grinding, a grinder using, for example, a file is used to grind the surface.

The light sources can be coloured, and optionally arranged so that there is colour mixing to achieve a uniform white. The relative levels of the colours can be controlled to control the colour temperature if desired.

The panels can be incorporated into buildings, windows, mirrors, backlights for display systems and so on. Arrays of the panels can be built up to illuminate larger areas.

Other variations can be envisaged within the scope of the claims.

## Claims

1. A laminated glass lighting panel, comprising
a first glass substrate (111) and an organic glass layer (13);
at least one light source (14) being arranged to emit light into the panel along a plane of the panel,
wherein at least part of the organic glass layer (13) is arranged to deflect the light out of the plane of the panel and through at least the first glass substrates (111) to provide a diffused light output,
**characterized in that** the first glass substrate and the organic glass layer are laminated together via a first plastic interlayer (121), the first plastic interlayer having a refractive index that is chosen to be equal to the refractive index of the organic glass layer, and wherein the organic glass layer (13) is at least partially light diffusive to cause the light to be deflected.

2. The lighting panel of claim 1, **characterized in that** the at least one light source (14) is arranged to emit light into the organic glass layer (13) predominantly along a plane of the panel.

3. The lighting panel of anyone of the preceding claims, **characterized in that** the organic glass layer (13) is a poly(methyl methacrylate) layer.

4. The lighting panel of claim 3, **characterized in that** the organic glass layer (13) is a poly(methyl methacrylate) layer embedding colorless diffuser particles which cause the light to diffuse forwards.

5. The lighting panel of anyone of the preceding claims, **characterized in that** the first plastic interlayer (121) is a transparent polyurethane layer.

6. The lighting panel of any preceding claim, **characterized in that** the at least one light source (14) comprises a light source mounted on a frame at an edge of one or both of the glass substrates so as to face the first plastic interlayer.

7. The lighting panel of any preceding claim, **characterized in that** the at least one light source (14) comprises a side emitting source mounted on an interior surface of one of the glass substrates.

8. The lighting panel of any preceding claim, **characterized in that** the panel also comprises a second glass substrate (112), the first glass substrate, the organic glass layer and the second glass substrate being laminated together via respectively a first and a second (122) plastic interlayer , both plastic interlayers having a refractive index that is chosen to be equal to the refractive index of the organic glass layer.

9. A lighting panel according to any preceding claim, **characterized in that** at least one surface of the organic glass layer (13) has at least one default.

10. A method of manufacturing a laminated glass lighting panel comprising a first glass substrate (111) and an organic glass layer (13) and comprising the following steps:

laminating the first glass substrate (111) and the organic glass layer (13), with a first plastic interlayer (121) in between, the plastic interlayer having a refractive index that is chosen to be equal to the refractive index of the organic glass layer, and forming at least one light source (14) to emit light into the panel along a plane of the panel, wherein the organic glass layer (13) is at least partially light diffusive to cause the light to be deflected and at least part of the organic glass layer is arranged to deflect the light out of the plane of the panel and through at least the first glass substrates to provide a diffused light output.

11. A method of manufacturing a laminated glass lighting panel according to claim 10, **characterized in that** at least one surface of the organic glass layer (13) has at least one default.

12. A method of manufacturing a laminated glass lighting panel according to claim 11, **characterized in that**, the laminating step comprises a step of heating the first plastic interlayer (121) so that the melted plastic interlayer fills said default(s).

**Patentansprüche**

1. Leuchtschirm aus laminiertem Glas, der Folgendes umfasst
ein erstes Glassubstrat (111) und eine organische Glasschicht (13);
mindestens eine Lichtquelle (14), die so angeordnet ist, dass sie Licht entlang einer Ebene des Schirms in den Schirm emittiert,
wobei mindestens ein Teil der organischen Glasschicht (13) so angeordnet ist, dass das Licht aus der Ebene des Schirms heraus und durch mindestens das erste Glassubstrat (111) abgelenkt wird, um eine diffuse Lichtausgabe bereitzustellen,
**dadurch gekennzeichnet, dass** das erste Glassubstrat und die organische Glasschicht mittels einer ersten Kunststoffzwischenschicht (121) zusammenlaminiert sind, wobei die erste Kunststoffzwischenschicht einen Brechungsindex aufweist, der so gewählt wird, dass er gleich dem Brechungsindex der organischen Glasschicht ist, und
wobei die organische Glasschicht (13) zumindest teilweise lichtdiffundierend ist, um zu bewirken, dass das Licht abgelenkt wird.

2. Leuchtschirm nach Anspruch 1, **dadurch gekennzeichnet, dass** die mindestens eine Lichtquelle (14) so angeordnet ist, dass sie vorwiegend entlang einer Ebene des Schirms Licht in die organische Glasschicht (13) emittiert.

3. Leuchtschirm nach einem der vorhergehenden Ansprüche, **dadurch gekennzeichnet, dass** es sich bei der organischen Glasschicht (13) um eine Poly(methylmethacrylat)schicht handelt.

4. Leuchtschirm nach Anspruch 3, **dadurch gekennzeichnet, dass** es sich bei der organischen Glasschicht (13) um eine Poly(methylmethacrylat)schicht handelt, die farblose Diffusionspartikel einbettet, die bewirken, dass das Licht nach vorne diffundiert.

5. Leuchtschirm nach einem der vorhergehenden Ansprüche, **dadurch gekennzeichnet, dass** es sich bei der ersten Kunststoffzwischenschicht (121) um eine transparente Polyurethanschicht handelt.

6. Leuchtschirm nach einem der vorhergehenden Ansprüche, **dadurch gekennzeichnet, dass** die mindestens eine Lichtquelle (14) eine Lichtquelle umfasst, die auf einem Rahmen an einem Rand von einem oder beiden der Glassubstrate befestigt ist, so dass sie der ersten Kunststoffzwischenschicht zugewandt ist.

7. Leuchtschirm nach einem der vorhergehenden Ansprüche, **dadurch gekennzeichnet, dass** die mindestens eine Lichtquelle (14) eine seitwärts emittierende Quelle umfasst, die an einer Innenfläche von einem der Glassubstrate befestigt ist.

8. Leuchtschirm nach einem der vorhergehenden Ansprüche, **dadurch gekennzeichnet, dass** der Schirm auch ein zweites Glassubstrat (112) umfasst, wobei das erste Glassubstrat, die organische Glasschicht und das zweite Glassubstrat mittels einer ersten bzw. einer zweiten (122) Kunststoffzwischenschicht zusammenlaminiert sind, wobei beide Kunststoffzwischenschichten einen Brechungsindex aufweisen, der so gewählt wird, dass er gleich dem Brechungsindex der organischen Glasschicht ist.

9. Leuchtschirm nach einem der vorhergehenden Ansprüche, **dadurch gekennzeichnet, dass** mindestens eine Oberfläche der organischen Glasschicht (13) mindestens eine Mangelstelle aufweist.

10. Verfahren zur Herstellung eines Leuchtschirms aus laminiertem Glas, der ein erstes Glassubstrat (111) und eine organische Glasschicht (13) umfasst, wobei das Verfahren die folgenden Schritte umfasst:

    Laminieren des ersten Glassubstrats (111) und der organischen Glasschicht (13) mit einer ersten Kunststoffzwischenschicht (121) dazwischen, wobei die Kunststoffzwischenschicht einen Brechungsindex aufweist, der so gewählt ist, dass er gleich dem Brechungsindex der organischen Glasschicht ist,
    und Bilden mindestens einer Lichtquelle (14), um Licht entlang einer Ebene des Schirms in den Schirm zu emittieren,
    wobei die organische Glasschicht (13) mindestens teilweise lichtdiffundierend ist, um zu bewirken, dass das Licht abgelenkt wird und wobei mindestens ein Teil der organischen Glasschicht so angeordnet ist, dass das Licht aus der Ebene heraus und durch mindestens das erste Glassubstrat abgelenkt wird, um eine diffuse Lichtausgabe bereitzustellen.

11. Verfahren zur Herstellung eines Leuchtschirms aus laminiertem Glas nach Anspruch 10, **dadurch gekennzeichnet, dass** mindestens eine Oberfläche der organischen Glasschicht (13) mindestens eine Mangelstelle aufweist.

12. Verfahren zur Herstellung eines Leuchtschirms aus laminiertem Glas nach Anspruch 11, **dadurch gekennzeichnet, dass** der Schritt des Laminierens einen Schritt des Erhitzens der ersten Kunststoffzwischenschicht (121) umfasst, so dass die geschmolzene Kunststoffzwischenschicht die Mangelstelle(n) füllt.

**Revendications**

1. Panneau d'éclairage en verre feuilleté comprenant un premier substrat en verre (111) et une couche de verre organique (13) ;
   au moins une source de lumière (14) agencée de façon à émettre une lumière dans le panneau le long d'un plan du panneau,
   dans lequel au moins une partie de la couche de verre organique (13) est agencée de façon à dévier la lumière hors du plan du panneau et à travers au moins les premiers substrats en verre (111) pour produire une sortie de lumière diffuse,
   **caractérisé en ce que** le premier substrat en verre et la couche de verre organique sont feuilletés ensemble via une première couche intermédiaire plastique (121), la première couche intermédiaire plastique ayant un indice de réfraction qui est choisi de façon à être égal à l'indice de réfraction de la couche de verre organique, et
dans lequel la couche de verre organique (13) diffuse au moins partiellement la lumière pour provoquer une déviation de la lumière.

2. Panneau d'éclairage selon la revendication 1, **caractérisé en ce que** l'au moins une source de lumière (14) est agencée de façon à émettre une lumière dans la couche de verre organique (13) principalement le long d'un plan du panneau.

3. Panneau d'éclairage selon l'une quelconque des revendications précédentes, **caractérisé en ce que** la couche de verre organique (13) est une couche de poly(méthacrylate de méthyle).

4. Panneau d'éclairage selon la revendication 3, **caractérisé en ce que** la couche de verre organique (13) est une couche de poly(méthacrylate de méthyle) incorporant des particules de diffuseur incolore qui provoquent la diffusion de la lumière vers l'avant.

5. Panneau d'éclairage selon l'une quelconque des revendications précédentes, **caractérisé en ce que** la première couche intermédiaire plastique (121) est une couche de polyuréthane transparent.

6. Panneau d'éclairage selon l'une quelconque des revendications précédentes, **caractérisé en ce que** l'au moins une source de lumière (14) comprend une source de lumière montée sur un bâti au niveau d'un bord de l'un ou des deux des substrats en verre de façon à faire face à la première couche intermédiaire plastique.

7. Panneau d'éclairage selon l'une quelconque des revendications précédentes, **caractérisé en ce que** l'au moins une source de lumière (14) comprend une source émettant latéralement montée sur une surface intérieure de l'un des substrats en verre.

8. Panneau d'éclairage selon l'une quelconque des revendications précédentes, **caractérisé en ce que** le panneau comprend aussi un deuxième substrat en verre (112), le premier substrat en verre, la couche de verre organique et le deuxième substrat en verre étant feuilletés ensemble via respectivement des première et deuxième (122) couches intermédiaires plastiques, les deux couches intermédiaires plastiques ayant un indice de réfraction qui est choisi de façon à être égal à l'indice de réfraction de la couche de verre organique.

**9.** Panneau d'éclairage selon l'une quelconque des revendications précédentes, **caractérisé en ce qu'**au moins une surface de la couche de verre organique (13) a au moins un défaut.

**10.** Procédé pour fabriquer un panneau d'éclairage en verre feuilleté comprenant un premier substrat en verre (111) et une couche de verre organique (13), comprenant les étapes suivantes :

feuilletage du premier substrat en verre (111) et de la couche en verre organique (13) avec une première couche intermédiaire plastique (121) entre eux, la couche intermédiaire plastique ayant un indice de réfraction qui est choisi de façon à être égal à l'indice de réfraction de la couche de verre organique, et

formation d'au moins une source de lumière (14) pour qu'elle émette une lumière dans le panneau le long d'un plan du panneau,

dans lequel la couche de verre organique (13) diffuse au moins partiellement la lumière pour provoquer une déviation de la lumière, et

au moins une partie de la couche de verre organique est agencée de façon à dévier la lumière hors du plan du panneau et à travers au moins les premiers substrats en verre pour produire une sortie de lumière diffuse.

**11.** Procédé pour fabriquer un panneau d'éclairage en verre feuilleté selon la revendication 10, **caractérisé en ce qu'**au moins une surface de la couche de verre organique (13) a au moins un défaut.

**12.** Procédé pour fabriquer un panneau d'éclairage en verre feuilleté selon la revendication 11, **caractérisé en ce que** l'étape de feuilletage comprend une étape de chauffage de la première couche intermédiaire plastique (121) de façon que la couche intermédiaire plastique fondue remplisse ledit ou lesdits défauts.

Fig. 1

Fig. 2

EP 2 635 433 B1

Fig. 4

Fig. 5

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1840449 A
- WO 2010097110 A1